# EUROPEAN PATENT APPLICATION

(11) **EP 4 471 118 A1**
(43) Date of publication of application: **04.12.2024**
(21) Application number: 23746846.7
(22) Date of filing: 20.01.2023
(51) Int. Cl.: C12G 3/04

(54) **PACKAGED CARBONATED ALCOHOLIC BEVERAGE CONTAINING GIN AND PRODUCTION METHOD THEREFOR**

(30) Priority: 25.01.2022 JP 2022009551
(71) Applicant: Suntory Holdings Limited, Osaka-shi, Osaka 530-8203 (JP)
(72) Inventor: DOI, Shinji, Kawasaki-shi, Kanagawa 211-0067 (JP); MIURA, Yasushi, Kawasaki-shi, Kanagawa 211-0067 (JP)
(74) Representative: Vossius & Partner Patentanwälte Rechtsanwälte mbB
(86) International application number: PCT/JP2023/001650
(87) International publication number: WO 2023/145633

(57) **Abstract**

An object of the present invention is to provide a packaged carbonated alcoholic beverage containing gin, wherein the metallic scent and bitter aftertaste derived from gin are improved. A cooling sensation imparting substance is added to the packaged carbonated alcoholic beverage containing gin.

## Description

### TECHNICAL FIELD

The present invention relates to a beverage, more specifically a packaged carbonated alcoholic beverage containing gin, and a production method therefor.

### BACKGROUND ART

Packaged carbonated alcoholic beverages are known to be generally produced using a base liquor as an alcohol source. Examples of such base liquors used include distilled liquors such as shochu, spirits, and ingredient alcohols. As packaged carbonated alcoholic beverages in the market, there are products flavored by adding fruit juice, flavoring agents, sweeteners, acidulants, and the like to the base liquors.

Among packaged carbonated alcoholic beverages, products flavored with gin have a refreshing flavor derived from the characteristic aromatic components contained in gin, and there is a certain need among consumers.

Techniques for enhancing the flavoring effect on alcoholic beverages are known from before and, for example, an alcoholic beverage containing a coriander extract and sugar (Patent Literature 1), a packaged carbonated alcoholic beverage containing limonene and a cooling sensation imparting substance (Patent literature 2) have been reported to date.

### CITATION LIST

### PATENT LITERATURE

PTL 1: Japanese Patent No. 6798838
PTL 2: Japanese Patent Laid-Open No. 2019-180279

### SUMMARY OF INVENTION

### TECHNICAL PROBLEM

The present inventors found during the course of developing a packaged carbonated alcoholic beverage that the use of gin enables imparting of a distinctive refreshing flavor, however, it is problematic in that the metallic scent and bitter aftertaste derived from gin are likely felt, and thus an unpleasant flavor is imparted as well.

Accordingly, an object of the present invention is to provide a packaged carbonated alcoholic beverage containing gin, wherein the metallic aroma and bitter aftertaste derived from gin are improved.

### SOLUTION TO PROBLEM

As a result of conducting diligent research to solve the above problem, the present inventors found that the addition of a cooling sensation imparting substance is effective for improving the metallic scent and bitter aftertaste derived from gin in a packaged carbonated alcoholic beverage. The present inventors accomplished the present invention based on such findings.

The present invention relates to, but is not limited to, the following:
(1) A packaged carbonated alcoholic beverage comprising gin and a cooling sensation imparting substance.
(2) The beverage according to (1), comprising 0.1 to 10000 ppb of the cooling sensation imparting substance.
(3) The beverage according to (1) or (2), comprising 0.1 to 100 ppb of the cooling sensation imparting substance.
(4) The beverage according to any one of (1) to (3), wherein the cooling sensation imparting substance is at least one selected from the group consisting of menthol or a derivative thereof, menthone, camphor, pulegol, isopulegol, cineole, mentha oil, peppermint oil, spearmint oil, eucalyptus oil, 3-(l-menthoxy)propane-1,2-diol, N-alkyl-p-menthane-3-carboxamide, 2-methyl-3-(l-menthoxy)propane-1,2-diol, p-menthane-3,8-diol, 2-(l-menthoxy)ethan-1-ol, 3-(l-menthoxy)propan-1-ol, 4-(l-menthoxy)butan-1-ol, menthyl 3-hydroxybutanoate, menthyl lactate, menthone glycerine ketal, N-methyl-2,2-isopropylmethyl-3-methylbutanamide, and menthyl glyoxylate.
(5) The beverage according to any one of (1) to (4), having an alcohol content of 1 to 15 v/v%.
(6) The beverage according to any one of (1) to (5), having an alcohol content of 5 to 9 v/v%.
(7) The beverage according to any one of (1) to (6), having a degree of sweetness of 2 or less.
(8) The beverage according to any one of (1) to (7), wherein the package is a can.
(9) A method for producing a packaged carbonated alcoholic beverage, the method comprising the step of mixing gin and a cooling sensation imparting substance.

### ADVANTAGEOUS EFFECTS OF INVENTION

The present invention can provide a packaged carbonated alcoholic beverage containing gin, wherein a metallic scent and a bitter aftertaste are improved.

### DESCRIPTION OF EMBODIMENTS

The packaged carbonated alcoholic beverage of the present invention will now be described below. Note that, unless otherwise specified, "ppm", "ppb", and "wt%" as used herein mean weight/volume (w/v) ppm, ppb, and wt%, respectively.

One embodiment of the present invention is a packaged carbonated alcoholic beverage containing gin and a cooling sensation imparting substance. The use of the cooling sensation imparting substance makes it possible to improve the metallic scent and bitter aftertaste derived from gin in the packaged carbonated alcoholic beverage. Here, the metallic scent means an unpleasant smell that is pungent and reminiscent of metal.

### (Gin)

The beverage of the present invention contains gin. Gin is a type of distilled liquor that is made from a fermented liquid of grain such as barley, rye, or potato, and is flavored with juniper berries (a fruit of common juniper). In the present invention, gin that is produced by oneself using a method known per-se may be used, or a product commercially available as an ingredient of a liquor may be used. In the present invention, a commercially available product is suitably used. In the present invention, a single type of gin may be solely used, or two or more types of gin may be used in combination.

In the present invention, the gin content of the beverage is not particularly limited, and can be suitably set according to various purposes. The gin content of the beverage of the present invention is expressed as the amount (v/v%) of gin-derived alcohol in the beverage. For example, when gin having an alcohol content (alcohol strength) of 40 v/v% is contained in an amount of 10 v/v% in a beverage, the gin content of the beverage is expressed as 4 v/v%, which is the amount of gin-derived alcohol in the beverage. The gin content of the beverage of the present invention is not particularly limited, and is, for example, 0.01 v/v% or more, preferably 0.1 v/v% or more, and more preferably 0.5 v/v% or more. The upper limit of the gin content is also not particularly limited, and the gin content of the beverage of the present invention is, for example, 15 v/v% or less, preferably 10 v/v% or less, and more preferably 7 v/v% or less. The gin content in the beverage of the present invention is not particularly limited, and is, for example, 0.01 to 15 v/v%, preferably 0.1 to 10 v/v%, more preferably 1 to 9 v/v%, and even more preferably 3 to 7 v/v%. When the beverage of the present invention contains two or more types of gin, the content refers to the total gin content.

### (Cooling sensation imparting substance)

The beverage of the present invention contains a cooling sensation imparting substance. In the present invention, the cooling sensation imparting substance means a substance from which a cooling sensation is felt when put in the mouth. Examples of the cooling sensation imparting substance include, but are not particularly limited, menthol or a derivative thereof, menthone, camphor, pulegol, isopulegol, cineole, mentha oil, peppermint oil, spearmint oil, eucalyptus oil, 3-(l-menthoxy)propane-1,2-diol, N-alkyl-p-menthane-3-carboxamide, 2-methyl-3-(l-menthoxy)propane-1,2-diol, p-menthane-3,8-diol, 2-(l-menthoxy)ethan-1-ol, 3-(l-menthoxy)propan-1-ol, 4-(l-menthoxy)butan-1-ol, menthyl 3-hydroxybutanoate, menthyl lactate, menthone glycerine ketal, N-methyl-2,2-isopropylmethyl-3-methylbutanamide, and menthyl glyoxylate. The derivative of menthol is not particularly limited, and examples include those obtained by replacing the hydrogen atom of a hydroxy group in the chemical structure of menthol with a C1 to C6 alkyl group that is optionally substituted with one or more hydroxy groups, or replacing the hydrogen atom with a C1 to C6 alkylcarbonyl group that is optionally substituted with one or more hydroxy groups. In the present invention, one cooling sensation imparting substance may be used singly, or two or more may be used in combination. Menthol or a derivative thereof is preferably used as a cooling sensation imparting substance. Menthol used in the present invention may be either l-menthol or d-menthol, and may be a mixture thereof.

In the present invention, the origin of the cooling sensation imparting substance is not particularly limited, and may be an extract of herb such as mint or a distillate thereof, may be an ingredient liquor that serves as an alcohol source, or may be another additive.

The cooling sensation imparting substance content of the beverage of the present invention is not particularly limited, and is, for example, 0.1 to 10000 ppb. When the cooling sensation imparting substance is used within this content range, the metallic scent and bitter aftertaste derived from gin can be effectively improved. The cooling sensation imparting substance content is preferably 0.5 ppb or more, more preferably 1 ppb or more, even more preferably 3 ppb or more, and yet more preferably 5 ppb or more. Also, the cooling sensation imparting substance content is preferably 1000 ppb or less, more preferably 500 ppb or less, even more preferably 100 ppb or less, and even more preferably 50 ppb or less. The cooling sensation imparting substance content of the beverage of the present invention is preferably 0.5 to 1000 ppb, more preferably 1 to 500 ppb, even more preferably 3 to 100 ppb, and yet more preferably 5 to 50 ppb.

In the present invention, the cooling sensation imparting substance content of the beverage can be measured using gas chromatography. When two or more cooling sensation imparting substances are used, the content means the total content of the cooling sensation imparting substances.

### (Alcohol content)

The beverage of the present invention is a carbonated alcoholic beverage. In the present invention, unless otherwise specified, "alcohol" refers to ethanol. The alcohol content of the beverage of the present invention is not particularly limited, and is, for example, 1 to 15 v/v%. An alcohol content within the above range tends to result in a gin-containing carbonated alcoholic beverage that has a richer taste and is easier to drink. The alcohol content of the beverage of the present invention is preferably 1 to 10 v/v%, more preferably 3 to 9 v/v%, even more preferably 4 to 9 v/v%, and yet more preferably 5 to 9 v/v%.

The alcohol content of the beverage can be measured by any known method and, for example, can be measured with a vibrating densimeter. Specifically, the beverage is, if necessary, stripped of carbon dioxide gas by filtration or sonication to prepared a sample, then the sample is subjected to steam distillation, and the density at 15°C of the resulting distillate is measured and converted to an alcohol content in reference to "Table 2 Conversion Table Between Alcohol Content, Density (15°C), and Specific Gravity (15/15°C)" appended to Official Analysis Method of the National Tax Agency of Japan (National Tax Agency Directive No. 6 in 2007, revised on June 22, 2007). In the present invention, the alcohol content is synonymous with alcohol strength (v/v%).

The alcohol content of the beverage of the present invention may be regulated using the above-described gin, or may be regulated using gin and another liquor. That is to say, the beverage of the present invention may contain a liquor other than gin. The liquor other than gin may be, for example, a distilled liquor other than gin, and the distilled liquor is not limited by the ingredient and production method thereof. Examples of the distilled liquor other than gin include spirits (such as vodka, rum, tequila, gin, and aquavit), neutral spirits, liqueurs, shochu, and ingredient alcohols. The distilled liquor other than gin used in the present invention is preferably a neutral spirit.

### (Carbon dioxide gas)

The beverage of the present invention contains carbon dioxide gas. Carbon dioxide gas can be added to the beverage using a method commonly known to those skilled in the art, and as non-limiting examples of such methods, carbon dioxide may be dissolved in the beverage under pressure, carbon dioxide and the beverage may be mixed in piping using a mixer such as a carbonator of Tuchenhagen GmbH, the beverage may be sprayed into a tank filled with carbon dioxide to cause the beverage to absorb carbon dioxide, or the beverage may be mixed with carbonated water. The pressure of carbon dioxide gas is regulated by suitably using such means.

The carbon dioxide gas pressure of the beverage of the present invention at a beverage temperature of 20°C is not particularly limited, and is, for example, 0.5 to 4.0 kgf/cm², preferably 1.0 to 3.5 kgf/cm², and more preferably 1.5 to 3.4 kgf/cm². In the present invention, the carbon dioxide gas pressure can be measured using a gas volume analyzer GVA-500A manufactured by Kyoto Electronics Manufacturing Co., Ltd. For example, the temperature of a sample is regulated to 20°C, air in a package in the gas volume analyzer is released (snifted), the package is shaken, and then the carbon dioxide gas pressure is measured. Herein, unless specified otherwise, the carbon dioxide gas pressure means a carbon dioxide gas pressure at 20°C.

### (Degree of sweetness)

The degree of sweetness of the beverage of the present invention is not particularly limited, and is, for example, 5 or less. When the degree of sweetness is 5 or less, the refreshing flavor specific to gin tends to be more likely felt in the beverage of the present invention. The degree of sweetness of the beverage of the present invention is preferably 4 or less, more preferably 3 or less, and even more preferably 2 or less.

The degree of sweetness herein is a measure of the sweetness of a beverage, with "1" being the sweetness of a beverage containing 1 g of sucrose per 100 g of the beverage. The degree of sweetness of the beverage is determined by converting the content of each sweetening component into a sucrose equivalent amount based on the relative strength of sweetness of the sweetening component relative to 1 degree of sweetness of sucrose, and then summing the sucrose sweetness equivalent amounts of all sweetening components (also including sweetening components derived from fruit juice, extracts, etc.) contained in the beverage. The relative strengths of sweetness of various representative sweetening components relative to degree 1 of the sweetness of sucrose are shown in the table below. For sweetening components not listed in the table below, the degree of sweetness provided by the manufacturer or distributor of such a sweetening component can be used, or the degree of sweetness can be determined by sensory evaluations.

**[Table 1]**

| Sweetening component | Degree of sweetness |
|---|---|
| Sucrose | 1 |
| Glucose | 0.6 |
| Fructose | 1.2 |
| Isomerized sugar (Fructose 55%) | 1 |
| Lactose | 0.15 |
| Trehalose | 0.4 |
| D-Psicose | 0.7 |
| Maltose | 0.4 |
| Sorbitol | 0.6 |
| Mannitol | 0.6 |
| Maltitol | 0.8 |
| Xylitol | 0.6 |
| Reduced palatinose | 0.45 |
| Erythritol | 0.8 |
| Lactitol | 0.8 |
| Hydrogenated starch hydrolysate | 0.1 |
| Stevia | 100 |
| Glycyrrhizin | 50 |
| Thaumatin | 2000 |
| Saccharin | 200 |
| Aspartame | 100 |
| Acesulfame potassium | 200 |
| Sucralose | 600 |
| Alitame | 2000 |
| Sodium cyclohexylsulfamate | 30 |
| Dultin | 200 |
| Neotame | 1000 |
| Neohesperidin | 1000 |
| Monellin | 25000 |
| Lysozyme | 20 |
| Maltooligosaccharide | 0.45 |

The degree of sweetness of the beverage can be regulated using a sweetening component. The sweetening component may be directly added to the beverage, or an ingredient containing the sweetening component, such as fruit juice or an extract, may be added. Not only one but also two or more sweetening components may be added. Preferable sweetening components are fructose, isomerized sugar, glucose, sucrose, lactose, oligosaccharide (such as maltooligosaccharide), and sugar alcohols (such as erythritol and xylitol), and particularly preferable sweetening components are fructose and sucrose.

### (Terpinen-4-ol)

The beverage of the present invention contains terpinen-4-ol. Terpinen-4-ol is an isomer of terpineol represented by chemical formula C₁₀H₁₈O, and is also synonymously referred to as 4-methyl-1-(1-methylethyl)-3-cyclohexen-1-ol, and the CAS registration number thereof is 562-74-3. Terpinen-4-ol is known to be contained in the essential oil of a tea tree, and is also known to be contained in gin. In the present invention, terpinen-4-ol may be derived from gin, or may be derived from an ingredient other than gin.

The terpinen-4-ol content of the beverage of the present invention is not particularly limited, and is, for example, 2 to 5000 ppb, preferably 6 to 1000 ppb, and more preferably 6 to 500 ppb. While terpinen-4-ol is a component contained in gin as described above, in the present invention the concentration of this component in gin tends to be decreased through the process of filling a package with the beverage. The metallic scent derived from gin may be strongly felt when the concentration of terpinen-4-ol is decreased, and in such a case, the action of the cooling sensation imparting substance is more effectively manifested in the present invention. In the present invention, since terpinen-4-ol is contained in gin, the gin content of the beverage can also be regulated according to the terpinen-4-ol content of the beverage.

In the beverage of the present invention, the weight ratio of the cooling sensation imparting substance content to the terpinen-4-ol content ([cooling sensation imparting substance content]/[terpinen-4-ol content]) is not particularly limited, and is, for example, 0.00002 or more, preferably 0.0001 or more, more preferably 0.001 or more, and even more preferably 0.01 or more. Also, the weight ratio is, for example, 5000 or less, preferably 2000 or less, more preferably 1000 or less, and even more preferably 100 or less. Note that the weight ratio is a ratio calculated when the contents of terpinen-4-ol and the cooling sensation imparting substance are both in the same unit.

### (Other ingredients)

In addition to the various components set forth above, flavoring agents, nutritional enhancers (such as vitamins), antioxidants, emulsifiers, preservatives, extracts, dietary fiber, pH adjusters, quality stabilizers, and the like that are added to ordinary beverages can be added to the beverage of the present invention as long as the effects of the present invention are not impaired.

### (Beverage)

The type of the alcoholic beverage of the present invention is not particularly limited, and may be, for example, highball, chuhai, cocktail, sour, or the like. The terms "highball" and "chuhai" when used in connection with the beverage of the present invention refer to beverages containing water, a distilled liquor, and carbonic acid. Highball and chuhai may further contain fruit juice. The term "sour" when used in connection with the beverage of the present invention refers to a beverage containing a spirit, sour fruit juice of a citrus fruit or the like, a sweetening component, and carbonic acid. The term "cocktail" when used in connection with the beverage of the present invention refers to an alcoholic beverage made by mixing a base liquor with fruit juice or the like.

The beverage of the present invention is a packaged beverage that is in the state of being filled in a package. The package is not particularly limited, and examples include plastic bottles (such as PET bottles), cans (such as aluminum cans and steel cans), paper cartons, chilled cups, and glass bottles. In particular, a can is preferably used as a package in the present invention.

The beverage of the present invention may be a packaged beverage that is heat-sterilized. When performing heat sterilization, the method therefor is not particularly limited, and it can be performed using a conventional technique such as UHT sterilization or retort sterilization. The temperature of the heat sterilization treatment is not particularly limited, and is, for example, 65 to 130°C and preferably 85 to 120°C. The time of the heat sterilization treatment is not particularly limited, and is, for example, 10 to 40 minutes. Note that the heat sterilization treatment may be performed at a suitable temperature for several seconds, such as 5 to 30 seconds, as long as a sterilization value equivalent to that under the above conditions can be obtained.

### (Production method)

The beverage of the present invention can be produced by suitably blending the above-described components. In the production of the beverage of the present invention, the order of blending various components is not particularly limited. The production of the beverage of the present invention may include the step of blending the components and materials set forth above and the step of regulating the contents thereof. Various factors, such as the types of components and the contents thereof in the beverage, in the production of the beverage of the present invention are as described above in connection with the beverage of the present invention, or are obvious therefrom.

The production of the beverage of the present invention may include the step of heat-sterilizing the beverage as necessary and may also include the step of filling a package with the beverage, and through these steps, the packaged beverage can be obtained. While the conditions for carrying out heat sterilization are as described above, the conditions are not particularly limited.

While the method for producing the beverage of the present invention is not particularly limited as described above, the beverage of the present invention can be obtained by, for example, the following method. First, gin and, as necessary, a base liquor or an ingredient liquor are added to water for dilution such that the alcohol content is at a predetermined value. Next, predetermined amounts of a cooling sensation imparting substance and, as necessary, other additives are added, and the components are mixed uniformly. Then, carbonation is performed such that the carbon dioxide gas content is in a predetermined amount. Then, a package is filled with the resulting beverage and sealed, and is heat-sterilized as necessary. Thereby, the beverage of the present invention can be obtained. Note that carbon dioxide gas may be added to the beverage by using carbonated water in place of water. Another embodiment of the present invention is a method for producing a packaged carbonated alcoholic beverage, including the step of mixing gin and a cooling sensation imparting substance.

### EXAMPLES

Below, the present invention will now be specifically described by way of Examples, but the present invention is not limited thereto.

### <Reference Examples>

Beverage samples of gin-containing carbonated alcoholic beverages were prepared such that the final concentrations of various components were as shown in the table below. Specifically, beverage samples were prepared by mixing carbonated water with gin and citric acid (anhydrous), and an ingredient alcohol was added as necessary to regulate the alcohol content of the beverages. Gin used as an ingredient was gin product A (Suntory Gin SUI: alcohol strength 40%) in Reference Examples 1 to 4, gin product B (Beefeater Gin: alcohol strength 40%) in Reference Examples 5 and 6, and gin product C (Gordon's London Dry Gin: alcohol strength 43%) in Reference Examples 7 and 8. The beverage samples provided were packaged beverages filled in an aluminum can and those not filled. All beverage samples had a degree of sweetness of 0. The gin content was expressed by the amount of gin-derived alcohol in the beverage, and the same applies below.

The resulting beverage samples were subjected to sensory evaluations by a panel of two experts. The items and criteria of the sensory evaluations were as follows.

### (Metallic scent of gin)

1: Strong metallic scent of gin
2: Slightly strong metallic scent of gin
3: Slightly weak metallic scent of gin
4: Weak metallic scent of gin
5: Very weak metallic scent of gin

### (Bitterness of aftertaste)

1: Strong bitter aftertaste
2: Slightly strong bitter aftertaste
3: Slightly weak bitter aftertaste
4: Weak bitter aftertaste
5: Very weak bitter aftertaste

The evaluation results were the average of evaluation scores given by each expert panelist. As an evaluation that comprehensively expresses desirability as a carbonated alcoholic beverage, overall evaluations were collectively made by all expert panelists according to the following criteria.

### (Overall evaluation)

Poor (cross mark)
Fair (triangle)
Good (circle)
Excellent (double circle)

**[Table 2]**

| | | Reference Example 1 | Reference Example 2 | Reference Example 3 | Reference Example 4 | Reference Example 5 | Reference Example 6 | Reference Example 7 | Reference Example 8 | Reference Example 9 |
|---|---|---|---|---|---|---|---|---|---|---|
| Gin | v/v% | 7 | 7 | 0.1 | 0.1 | 7 | 7 | 7 | 7 | 0 |
| Citric acid | g/L | 0.06 | | | | | | | | |
| Alcohol content | v/v% | 7 | | | | | | | | |
| Carbon dioxide gas pressure | kgf/cm² | 2 | | | | | | | | |
| Packaged | | Not packaged | Packaged | Not packaged | Packaged | Not packaged | Packaged | Not packaged | Packaged | Packaged |
| Metallic scent of gin | | 5 | 1.5 | 5 | 2 | 4.5 | 1 | 4.5 | 1.5 | 5 |
| Bitter aftertaste | | 5 | 1.5 | 5 | 2 | 4.5 | 1 | 5 | 1.5 | 4.5 |
| Overall evaluation | | ○ | × | ○ | × | ○ | × | O | × | ○ |

The results are as provided above, and the samples of gin-containing, packaged carbonated alcoholic beverages all had a strong metallic scent of gin and a strong bitter aftertaste.

### <Experimental Example 1>

Beverage samples were prepared using gin, citric acid (anhydrous), l-menthol, carbonated water, and ingredient alcohol such that the final concentrations of various components were as shown in the table below. Specifically, beverage samples were prepared by mixing carbonated water with gin product A and adding citric acid (anhydrous) and l-menthol, and ingredient alcohol was added as necessary to regulate the alcohol content of the beverages. All beverage samples were filled in cans to be packaged beverages. All beverage samples had a degree of sweetness of 0. The concentrations of terpinen-4-ol contained in the beverages of various beverage samples are also shown.

The resulting beverage samples were subjected to sensory evaluations by a panel of two experts. In the sensory evaluations, the "metallic scent of gin" and "bitter aftertaste" were investigated using the same criteria as the Reference Examples. To this Experimental Example, evaluation items of "refreshing scent of gin" and "cooling sensation" were added, and evaluations were respectively made according to the following criteria.

### (Refreshing scent of gin)

1: Weak refreshing scent of gin
2: Slightly weak refreshing scent of gin
3: Slightly strong refreshing scent of gin
4: Strong refreshing scent of gin
5: Very strong refreshing scent of gin

### (Cooling sensation)

1: Strong cooling sensation
2: Slightly strong cooling sensation
3: Slightly weak cooling sensation
4: Weak cooling sensation
5: Very weak cooling sensation

The evaluation result was the average of evaluation scores given by each expert panelist. Also, using the same criteria and method as the Reference Examples, overall evaluations that express desirability as a carbonated alcoholic beverage were made.

**[Table 3-1]**

| | | Comparative Example 1-1 | Comparative Example 1-2 | Example 1-1 | Example 1-2 | Example 1-3 | Example 1-4 | Example 1-5 |
|---|---|---|---|---|---|---|---|---|
| Gin | v/v% | 7 | 0.1 | 7 | 7 | 7 | 7 | 7 |
| 1-Menthol | ppb | - | - | 0.1 | 1 | 10 | 100 | 1000 |
| Citric acid | g/L | 0.06 | | | | | | |
| Alcohol content | v/v% | 7 | | | | | | |
| Carbon dioxide gas pressure | kgf/cm² | 2 | | | | | | |
| Terpinen-4-ol | ppb | 440 | 6 | 440 | 440 | 440 | 440 | 440 |
| Refreshing scent of gin | | 4 | 1.5 | 4.5 | 5 | 5 | 4.5 | 4.5 |
| Metallic scent of gin | | 1.5 | 2 | 4 | 5 | 5 | 5 | 5 |
| Bitter aftertaste | | 1.5 | 2 | 3 | 5 | 5 | 5 | 4.5 |
| Cooling sensation | | 5 | 4 | 5 | 5 | 5 | 4 | 3 |
| Overall evaluation | | × | × | ○ | ⊙ | ⊙ | ○ | Δ |

**[Table 3-2]**

| | | Example 1-6 | Example 1-7 | Example 1-8 | Example 1-9 | Example 1-10 | Example 1-11 | Example 1-12 | Example 1-13 |
|---|---|---|---|---|---|---|---|---|---|
| Gin | v/v% | 5 | 5 | 3 | 3 | 0.5 | 0.5 | 0.1 | 0.1 |
| 1-Menthol | ppb | 0.1 | 100 | 0.1 | 100 | 0.1 | 100 | 0.1 | 100 |
| Citric acid | g/L | 0.06 | | | | | | | |
| Alcohol content | v/v% | 7 | | | | | | | |
| Carbon dioxide gas pressure | kgf/cm² | 2 | | | | | | | |
| Terpinen-4-ol | ppb | 320 | 320 | 190 | 190 | 30 | 30 | 6 | 6 |
| Refreshing scent of gin | | 4.5 | 4.5 | 3.5 | 4 | 3 | 3 | 2 | 2 |
| Metallic scent of gin | | 4 | 5 | 4 | 5 | 4 | 5 | 3.5 | 4.5 |
| Bitter aftertaste | | 3 | 5 | 3 | 5 | 3 | 4.5 | 4 | 5 |
| Cooling sensation | | 5 | 4 | 4.5 | 4 | 4 | 4 | 5 | 4.5 |
| Overall evaluation | | ○ | ⊙ | ○ | ⊙ | ○ | ⊙ | ○ | ⊙ |

The results were as provided above, and when menthol was contained in the gin-containing, packaged carbonated alcoholic beverages, the metallic scent and bitter aftertaste derived from gin were improved. The cooling sensation was felt somewhat strongly when the menthol content was at a 1000 ppb level, and it was thus found that adding 100 ppb or less menthol is more preferable at which the cooling sensation is reduced.

### <Experimental Example 2>

The type of gin used as an ingredient was changed, and beverage samples were prepared such that the final concentrations of various components were as shown in the table below. Preparation of beverage samples were carried out in the same manner as Experimental Example 1. The ingredient gin used was gin product A, gin product B, or gin product C as in the Reference Examples. All beverage samples were filled in cans to be packaged beverages. All beverage samples had a degree of sweetness of 0.

The resulting beverage samples were subjected to sensory evaluations by a panel of two experts. The sensory evaluations were conducted using the same criteria and methods as Experimental Example 1 to examine the "metallic scent of gin", "bitter aftertaste", "refreshing scent of gin" and "cooling sensation" and overall evaluations.

**[Table 4]**

| | | Gin product A | | Gin product B | | Gin product C | |
|---|---|---|---|---|---|---|---|
| | | Comparative Example 2-1 | Example 2-1 | Comparative Example 2-2 | Example 2-2 | Comparative Example 2-3 | Example 2-3 |
| Gin | v/v% | 7 | 7 | 7 | 7 | 7 | 7 |
| 1-Menthol | ppb | - | 10 | - | 10 | - | 10 |
| Citric acid | g/L | 0.06 | 0.06 | 0.06 | 0.06 | 0.06 | 0.06 |
| Alcohol content | v/v% | 7 | 7 | 7 | 7 | 7 | 7 |
| Carbon dioxide gas pressure | kgf/cm² | 2 | 2 | 2 | 2 | 2 | 2 |
| Refreshing scent of gin | | 4 | 5 | 2.5 | 3.5 | 4.5 | 5 |
| Metallic scent of gin | | 1.5 | 5 | 1 | 4 | 1.5 | 3.5 |
| Bitter aftertaste | | 1.5 | 5 | 1 | 4 | 1.5 | 3.5 |
| Cooling sensation | | 5 | 5 | 3.5 | 5 | 5 | 5 |
| Overall evaluation | | × | ⊙ | × | ⊙ | × | ⊙ |

The results are as provided above, and even when the type of ingredient gin was changed, the effect of improving the metallic scent and bitter aftertaste derived from gin was obtained due to the addition of menthol.

### <Experimental Example 3>

Concerning the beverages obtained by changing the acidity, carbon dioxide gas pressure, and alcohol content, beverage samples were prepared such that the final concentrations of various components were as shown in the table below. All beverage samples were prepared in the same manner as Experimental Example 1, and filled in cans to be packaged beverages. All beverage samples had a degree of sweetness of 0.

The resulting beverage samples were subjected to sensory evaluations by a panel of two experts. The sensory evaluations were conducted using the same criteria and methods as Experimental Example 1 to examine the "metallic scent of gin", "bitter aftertaste", "refreshing scent of gin" and "cooling sensation" and overall evaluations.

**[Table 5]**

| | | Example 3-1 | Example 3-2 | Example 3-3 | Example 3-4 | Example 3-5 | Example 3-6 |
|---|---|---|---|---|---|---|---|
| Gin | v/v% | 7 | 7 | 7 | 7 | 1 | 9 |
| 1-Menthol | ppb | 10 | 10 | 10 | 10 | 10 | 10 |
| Citric acid | g/L | 0.03 | 1 | 0.06 | 0.06 | 0.06 | 0.06 |
| Alcohol content | v/v% | 7 | 7 | 7 | 7 | 1 | 9 |
| Carbon dioxide gas pressure | kgf/cm² | 2 | 2 | 1 | 3 | 2 | 2 |
| Refreshing scent of gin | | 5 | 4.5 | 4.5 | 5 | 2.5 | 5 |
| Metallic scent of gin | | 4.5 | 5 | 4.5 | 4 | 5 | 4 |
| Bitter aftertaste | | 4.5 | 5 | 4 | 4.5 | 5 | 3.5 |
| Cooling sensation | | 5 | 5 | 5 | 5 | 5 | 5 |
| Overall evaluation | | ⊙ | ⊙ | ⊙ | ⊙ | ⊙ | ⊙ |

The results are as provided above, and in the beverages obtained by changing the acidity, carbon dioxide gas pressure, and alcohol content as well, the metallic scent and bitter aftertaste derived from gin were improved due to the addition of menthol.

## Claims

1. A packaged carbonated alcoholic beverage comprising gin and a cooling sensation imparting substance.

2. The beverage according to claim 1, comprising 0.1 to 10000 ppb of the cooling sensation imparting substance.

3. The beverage according to claim 1 or 2, comprising 0.1 to 100 ppb of the cooling sensation imparting substance.

4. The beverage according to any one of claims 1 to 3, wherein the cooling sensation imparting substance is at least one selected from the group consisting of menthol or a derivative thereof, menthone, camphor, pulegol, isopulegol, cineole, mentha oil, peppermint oil, spearmint oil, eucalyptus oil, 3-(l-menthoxy)propane-1,2-diol, N-alkyl-p-menthane-3-carboxamide, 2-methyl-3-(l-menthoxy)propane-1,2-diol, p-menthane-3,8-diol, 2-(l-menthoxy)ethan-1-ol, 3-(l-menthoxy)propan-1-ol, 4-(l-menthoxy)butan-1-ol, menthyl 3-hydroxybutanoate, menthyl lactate, menthone glycerine ketal, N-methyl-2,2-isopropylmethyl-3-methylbutanamide, and menthyl glyoxylate.

5. The beverage according to any one of claims 1 to 4, having an alcohol content of 1 to 15 v/v%.

6. The beverage according to any one of claims 1 to 5, having an alcohol content of 5 to 9 v/v%.

7. The beverage according to any one of claims 1 to 6, having a degree of sweetness of 2 or less.

8. The beverage according to any one of claims 1 to 7, wherein the package is a can.

9. A method for producing a packaged carbonated alcoholic beverage, the method comprising the step of mixing gin and a cooling sensation imparting substance.
